# EUROPÄISCHE PATENTSCHRIFT

(11) **EP 4 183 533 B1**
(45) Veröffentlichungstag und Bekanntmachung des Hinweises auf die Patenterteilung: **10.04.2024**
(21) Anmeldenummer: 21209489.0
(22) Anmeldetag: 22.11.2021
(51) Int. Cl.: B25J 15/04, B25J 11/00, B23Q 3/155, B23Q 7/10, B23Q 11/08

(54) **BAUROBOTER MIT EINEM MANIPULATOR UND EINEM ABLAGESYSTEM**
CONSTRUCTION ROBOT WITH A MANIPULATOR AND A STORAGE SYSTEM
ROBOT DE CONSTRUCTION DOTÉ D'UN BRAS MANIPULATEUR ET D'UN SYSTÈME DE STOCKAGE

(43) Veröffentlichungstag der Anmeldung: 24.05.2023
(73) Patentinhaber: Hilti Aktiengesellschaft, 9494 Schaan (LI)
(72) Erfinder: LUKIC, Sasha, 9470 Buchs (CH); KUECUE, Oemer, 9486 Schaanwald (LI)
(74) Vertreter: Hilti Aktiengesellschaft Corporate Intellectual Property

(56) Entgegenhaltungen:
- EP-A1- 1 753 928
- EP-A1- 3 098 025
- CN-B- 103 072 034
- CN-U- 202 742 116
- DE-U1-202007 016 098
- DE-U1-202010 001 559
- KR-B1- 100 828 608
- Hilti North America: "HOW TO operate the Hilti Jaibot - construction robot for overhead drilling applications", , 11. Dezember 2020 (2020-12-11), XP055920184, Gefunden im Internet: URL:https://www.youtube.com/watch?v=WYf-o8 c1ijc [gefunden am 2022-05-11]

## Beschreibung

Die Erfindung geht aus von einem Bauroboter mit einem Manipulator und mit einem Ablagesystem mit wenigstens einer Ablagestelle, wobei die Ablagestelle einen Ablageplatz und eine Schutzabdeckung aufweist.

Die Schutzabdeckung kann den Ablageplatz abdecken. Will man auf den Ablageplatz der Ablagestelle zugreifen, so ist zunächst die Schutzabdeckung zu entfernen.

Ein solcher Bauroboter ist in der YouTube Video ""How to operate the Hilti Jaibot - construction robot for overhead drilling applications" gezeigt. In dieser Video wird die Schutzabdeckung des Ablageplatzes von einem Benutzer / Techniker manuell betätigt.

Sollte dagegen der Bauroboter mit dem Manipulator auf die Ablagestelle, insbesondere den Ablageplatz selber zugreifen, so müsste dieser also eingerichtet sein, die Schutzabdeckung zu entfernen.

Aufgabe der vorliegenden Erfindung ist es daher, einen Bauroboter mit einem Manipulator und mit einem ein Ablagesystem mit wenigstens einer einen Ablageplatz aufweisenden Ablagestelle und einer Schutzabdeckung anzubieten, die möglichst einfach aufgebaut sind und einen zuverlässigen Zugriff auf die Ablagestelle und insbesondere auf den Ablageplatz bieten.

Gelöst wird die Aufgabe durch einen Bauroboter gemäß dem Anspruch 1, mit einem Manipulator und mit einem Ablagesystem, wobei das Ablagesystem wenigstens eine Ablagestelle aufweist, wobei die Ablagestelle eine Schutzabdeckung, beispielsweise zum Schutz vor eintretenden und / oder austretenden Partikeln, Flüssigkeiten und / oder Gasen, und einen Ablageplatz aufweist, wobei die Schutzabdeckung schwenkbar an der Ablagestelle angeordnet ist. Erfindungsgemäß ist an einem Endeffektor des Manipulators ein Steuervorsprung ausgebildet, der eingerichtet ist, eine Steuerkontur der wenigstens einen Ablagestelle des Ablagesystems abzufahren.

Die Schutzabdeckung kann insbesondere seitlich schwenkbar sein. Der Ablageplatz kann von oben zugänglich sein.

Somit kann der Bauroboter beispielsweise von oben dem Ablageplatz nähern.

< Außerdem wird kein zweiter, unabhängiger Manipulator oder dergleichen benötigt, um während eines Zugriffs auf den Ablageplatz das Aktuatorbetätigungselement zu betätigen. Somit lassen sich Kosten reduzieren. Fehlbetätigungen, beispielsweise weil ein zweiter Manipulator das Aktuatorbetätigungselement verfehlt, lassen sich vermeiden. Die Zuverlässigkeit, mit der die Schutzabdeckung für einen Zugriff auf den Ablageplatz verschwenkt wird, lässt sich somit steigern.

Auch kann somit jede Ablagestelle autark ausgebildet sein. Das Ablagesystem kann somit modular aufgebaut und / oder aufbaubar sein. Es werden keine oder zumindest weniger Verbindungsleitungen von beispielsweise einer gemeinsamen Stelle des Ablagesystems zu jeder einzelnen Ablagestelle benötigt. Der konstruktive Aufwand und somit Herstellkosten lassen sich reduzieren. >

Die Steuerkontur kann so eingerichtet sein dass durch Abfahren der Steuerkontur die Schutzabdeckung von einer Ausgangsstellung in eine Schwenkstellung verschwenkbar ist. Insbesondere kann das Aktuatorbetätigungselement als Steuerkontur ausgebildet sein und / oder eine solche umfassen.

Somit kann durch Abfahren der Steuerkontur der Ablageplatz freigegeben werden. Die Steuerkontur kann auf eine mechanische Weise abgefahren werden. Zum Verschwenken kann auf eine Vielzahl von sonst erforderlichen Bauelementen und Vorrichtungen verzichtet werden. Beispielsweise bedarf es keines zusätzlichen elektromechanischen, hydraulischen und / oder pneumatischen Aktuators. Das Verschwenken der Schutzabdeckung kann auf rein mechanische Weise erfolgen. Dadurch kann die Ausfallsicherheit verbessert werden. Insbesondere benötigt die Steuerung des Verschwenkens keine elektrische Energie. Auf entsprechende elektrische Versorgungsleitungen kann verzichtet werden.

< >

Die Schutzabdeckung kann eingerichtet sein zum Schutz des Ablageplatzes vor Störstoffen, wie zum Beispiel Partikeln wie Staub oder Farbspritzern, Spritzwasser, unerwünschten Gasen, Flüssigkeiten und / oder dergleichen. Sie kann vor dem Eintritt und / oder dem Austritt von solchen Störstoffen in bzw. aus dem Ablageplatz eingerichtet sein. Die Schutzabdeckung kann eine Schutzplatte sein. Sie kann horizontal und / oder vertikal verschwenkbar sein. Sie kann derart gelagert sein, dass die Schwenkstellung höher liegt als die Ausgangsstellung.

Weist die Ablagestelle ein Sperrelement auf, das eingerichtet ist, die Schutzabdeckung zumindest in der Schwenkstellung zu fixieren, so kann die Schutzabdeckung insbesondere nach Abfahren der Steuerkontur, in der Schwenkstellung gehalten sein und / oder werden. Auf übrige Bereiche der Ablagestelle, beispielsweise auf den Ablageplatz, kann dann frei zugreifbar sein und / oder frei zugegriffen werden. Beispielsweise kann ein Gegenstand dem Ablageplatz entnommen und / oder diesem hinzugefügt werden.

Das Sperrelement kann ein Sperrstift sein und / oder einen Sperrstift umfassen. Dazu kann das Sperrelement eine längliche, beispielsweise zylindrische, Form und / oder ein Element mit einer länglichen Form aufweisen.

Das Sperrelement kann einen Rastmechanismus aufweisen. Der Rastmechanismus kann eingerichtet sein, sodass das Sperrelement in einem aktiven Zustand, in dem es die Schutzabdeckung in der Schwenkstellung fixieren kann, und / oder in einem inaktiven Zustand, in dem die Schutzabdeckung verschwenkbar ist, lösbar festsetzbar ist. Das Sperrelement kann somit wenigstens in einem der Zustände fixierbar sein. Die Fixierung kann einschaltbar und / oder ausschaltbar sein. Beispielsweise kann das Sperrelement einen eingefahrenen Zustand als inaktiven Zustand aufweisen. Als aktiven Zustand kann das Sperrelement in einem ausgefahrenen Zustand sein. Ist das Sperrelement beispielsweise als Sperrstift ausgebildet, so kann der aktiven Zustand einem Zustand des Sperrelements entsprechen, bei dem das Sperrelement von seiner Umgebung abragt.

Die Schutzabdeckung und die Steuerkontur können an einer gemeinsamen Gewindeachse, welche ein Gewinde aufweist, drehbar gelagert sein. Somit kann sich die Schutzabdeckung mit der Steuerkontur mitbewegen. Wird durch Abfahren der Steuerkontur die Steuerkontur rotiert, kann somit auch die Schutzabdeckung rotiert und damit verschwenkt, insbesondere bis zur Schwenkstellung verschwenkt, werden.

Die Schutzabdeckung, insbesondere ihr Schwerpunkt, kann in der Schwenkstellung höher liegen als der Ausgangsstellung. Somit kann die Schutzabdeckung, wenn sie freigegeben ist, schwerkraftgetrieben und insbesondere selbsttätig, in die Ausgangsstellung zurückschwenken.

Alternativ oder ergänzend kann die Ablagestelle auch ein Rückholfederelement aufweisen. Das Rückholfederelement kann eingerichtet sein, beim Verschwenken der Schutzabdeckung von der Ausgangsstellung in die Schwenkstellung gespannt zu werden. Es kann ferner eingerichtet sein, federkraftgetrieben die freigegebene Schutzabdeckung von der Schwenkstellung in die Ausgangsstellung zurückzubewegen.

Zur Unterstützung einer schwerkraftgetriebenen Zurückstellung der Schutzabdeckung kann die Steuerkontur eine Steigung aufweisen, die größer oder gleich einer Steigung des Gewindes der Gewindeachse ist.

Auch ist denkbar, dass die Ablagestelle ein Betätigungselement aufweist. Das Betätigungselement kann eingerichtet sein, bei Betätigung eine Spannvorrichtung des Ablageplatzes zu aktivieren und / oder zu deaktivieren. Die Spannvorrichtung kann beispielsweise zum Halten eines Gegenstands, beispielsweise eines Verbrauchsmaterials und / oder eines Werkzeugs, eingerichtet sein. Insbesondere kann sie zum lösbaren Fixieren des Gegenstands am und / oder im Ablageplatz eingerichtet sein. Dann kann durch Betätigen des Betätigungselements die Spannvorrichtung lösbar sein. Nach Betätigen des Betätigungselement kann somit der Gegenstand, beispielsweise das Verbrauchsmaterial oder das Werkzeug, dem Ablageplatz entnommen werden. Ebenso ist es denkbar, bei betätigtem Betätigungselement einen solchen Gegenstand dem Ablageplatz hinzuzufügen.

Das Ablagesystem kann eingerichtet sein zur Aufnahme eines Gegenstands wie beispielsweise einem Verbrauchsmaterial, einem Werkzeug für eine elektrische Werkzeugmaschine und / oder einer elektrischen Werkzeugmaschine. Allgemein kann das Ablagesystem zur Ablage von wenigstens einem Gegenstand, wie er üblicherweise auf einer Baustelle genutzt wird, eingerichtet sein. Das Verbrauchsmaterial kann wenigstens ein Anker, beispielsweise ein Schraubanker, wenigstens ein Nagel und / oder dergleichen sein.

Das Werkzeug und / oder die Werkzeugmaschine können beispielsweise zum Bohren, Trennen, insbesondere Sägen, Schneiden und / oder Meißeln, zur Oberflächenbehandlung, beispielsweise zum Schleifen und / oder zum Pressen eingerichtet sein. Das Werkzeug kann somit beispielsweise ein Bohrwerkzeug, ein Meißelwerkzeug, ein Schneidwerkzeug, ein Schleifwerkzeug oder dergleichen sein.

Der Bauroboter kann besonders vielfältig eingesetzt werden, wenn er mit einem solchen Ablagesystem ausgestattet ist.

Beispielsweise kann der Bauroboter mithilfe seines Manipulators und / oder einem Endeffektor des Manipulators ein Werkzeug am Ablageplatz ablegen und / oder von dort aufnehmen. Denkbar ist alternativ oder ergänzend auch, dass der Bauroboter eine Werkzeugmaschine am Ablageplatz ablegt und / oder von dort aufnimmt. Alternativ oder ergänzend ist auch denkbar, dass der Bauroboter ein Verbrauchsmaterial am Ablageplatz ablegt und / oder von dort aufnimmt. Das Verbrauchsmaterial kann dann beispielsweise an einer Decke und / oder einer Wand der Baustelle verarbeitet werden. Somit lässt sich der Grad der Autonomie des Bauroboters wesentlich steigern. Insbesondere kann der Umfang erforderlicher manueller Eingriffe zur Ausführung einer Bauarbeit reduziert werden.

Der Bauroboter kann zur Ausführung von Bauarbeiten auf einer Hochbau-Baustelle und / oder einer Tiefbau-Baustelle ausgebildet sein. Er kann zur Ausführung von Bauarbeiten an einer Decke, einer Wand und / oder einem Boden eingerichtet sein. Er kann zum Bohren, Trennen, Meißeln, Schleifen und / oder Setzen eines Bauelements ausgebildet sein. Er kann ein oder mehrere Werkzeugmaschinen aufweisen. Insbesondere kann die Werkzeugmaschine wechselbar angeordnet und / oder ausgebildet sein. Die Werkzeugmaschine kann eine elektrische Werkzeugmaschine sein. Die Werkzeugmaschine kann ein Werkzeug aufweisen.

Der Endeffektor kann die Werkzeugmaschine und / oder das Werkzeug umfassen. Beispielsweise kann der Endeffektor eine elektrische Werkzeugmaschine aufweisen. Die elektrische Werkzeugmaschine kann ein Bauwerkzeug, ein Trennwerkzeug, ein Schleifwerkzeug und / oder ein Setzwerkzeug umfassen. Denkbar ist auch, dass der Endeffektor und / oder die Werkzeugmaschine zum Markieren ausgebildet sind. Beispielsweise kann der Endeffektor ein Farbsprühgerät aufweisen.

Der Manipulator kann als Roboterarm ausgebildet sein. Der Manipulator kann auch eine Hubvorrichtung aufweisen. Die Hubvorrichtung kann das vom Manipulator erreichbare Gesamtvolumen vergrößern. Der Manipulator kann wenigstens drei Freiheitsgrade aufweisen. Insbesondere kann er wenigstens sechs Freiheitsgrade aufweisen.

Der Bauroboter kann auch eine mobile Plattform aufweisen. Die mobile Plattform kann ein Räderfahrwerk und / oder ein Kettenfahrwerk umfassen. Die mobile Plattform kann wenigstens zwei Freiheitsgrade aufweisen. Der Bauroboter kann insgesamt wenigstens zehn Freiheitsgrade aufweisen.

Der Bauroboter kann eine Steuerung aufweisen. Die Steuerung kann als Rechnereinheit ausgebildet sein. Sie kann einen Prozessor, eine Speichereinheit und / oder einen auf dem Prozessor ausführbaren Programmcode aufweisen. Der Prozessor kann ein oder mehrere Unterprozessoren aufweisen. Der Programmcode kann eingerichtet sein, den Manipulator derart zu steuern, dass die Schutzabdeckung von der Ausgangsstellung in die Schwenkstellung und / oder umgekehrt verschwenkt wird, insbesondere wenn auf den Ablageplatz zugegriffen werden soll.

An dem Endeffektor des Manipulators ist erfindunsgemäß ein Steuervorsprung ausgebildet. Der Steuervorsprung ist eingerichtet, eine Steuerkontur der Ablagestelle des Ablagesystems abzufahren. Dazu kann der Programmcode eingerichtet sein, dass den Steuervorsprung entlang der Steuerkontur zu bewegen.

Somit kann der Bauroboter mithilfe des Steuervorsprungs eine Schutzabdeckung der Ablagestelle des Ablagesystems verschwenken. Insbesondere kann er einen Zugang zum Ablageplatz der Ablagestelle freigeben oder sperren. So kann er beispielsweise die Schutzabdeckung zunächst in die Schwenkstellung verschwenken. Er kann der Ablagestelle einen Gegenstand, beispielsweise ein Verbrauchsmaterial, ein Werkzeug und / oder eine Werkzeugmaschine, entnehmen. Anschließend kann die Schutzabdeckung, beispielsweise schwerkraftgetrieben, an ihre Ausgangsstellung zurückschwenken. Anschließend kann der Bauroboter den entnommenen Gegenstand, also beispielsweise das Verbrauchsmaterial, das Werkzeug und / oder die Werkzeugmaschine, auf der Baustelle verwenden.

Vorzugsweise kann der Steuervorsprung einen Steuerstift aufweisen und / oder sein. Der
Steuerungsstift kann eingerichtet sein, die Steuerkontur abzufahren. Dazu können insbesondere seine Abmessungen, seine Lage und / oder seine Position auf die Steuerkontur abgestimmt sein.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können.

In der schematischen Zeichnung sind Ausführungsbeispiele der Erfindung dargestellt und in der nachfolgenden Beschreibung näher erläutert.

Es zeigen:
- Fig. 1: eine schematische Darstellung in perspektivische Ansicht eines Bauroboters;
- Fig. 2: eine Ablagestelle in perspektivische Darstellung;
- Fig. 3: einen Ausschnitt aus Fig. 2 in vergrößerter Darstellung; und
- Fig. 4 und 5: die Ablagestelle gemäß Fig. 2 und 3 in anderen Zuständen.

In der nachfolgenden Beschreibung der Figuren werden zur Erleichterung des Verständnisses der Erfindung für gleiche oder sich funktional entsprechende Elemente jeweils die gleichen Bezugszeichen verwendet.

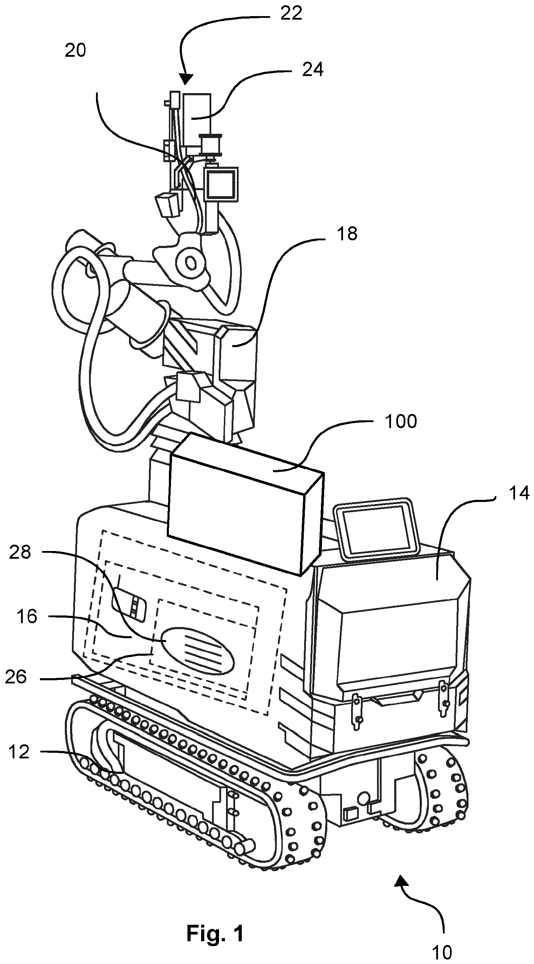

**Fig. 1** zeigt einen Bauroboter **10** mit einem als Kettenfahrwerk ausgebildeten Fahrwerk **12,** einem in einem Gehäuse **14** ausgebildeten Steuerraum **16** und einem oberseitig des Gehäuses 14 angeordneten Manipulator **18.** Der Manipulator 18 ist als multiaxial steuerbarer Arm ausgebildet, an dessen freien Ende ein Endeffektor **20** mit einer in diesem aufgenommenen Bohrwerkzeugmaschine **22** und einer Staubabsaugungsvorrichtung **24** angeordnet ist.

Der Bauroboter 10 ist zur Ausführung von Bauaufgaben, beispielsweise von Bohrarbeiten in Decken und Wänden, auf einer Baustelle, beispielsweise auf einer Hochbau-Baustelle, ausgebildet. Neben dem Manipulator 18 zur Ausführung der dem Bauroboter 10 zugeordneten Bauaufgaben, weist er eine innerhalb des Gehäuses 14, insbesondere im Steuerraum 16, angeordnete Rechnereinheit **26** auf. Die Rechnereinheit 26 umfasst eine Speichereinheit **28.**

Die Rechnereinheit 26 ist mit ausführbarem Programmcode ausgestattet, der Programmcode kann abrufbar und ausführbar in der Speichereinheit 28 gespeichert sein. Er kann eingerichtet sein, den Manipulator 18 zu steuern, so dass bei Bedarf ein Gegenstand von der Ablagestelle, insbesondere von einem Ablageplatz der Ablagestelle aufgenommen und / oder dort abgelegt werden kann.

Weiter weist der Bauroboter 10 ein Ablagesystem **100** auf, das in Fig. 1 lediglich schematisch dargestellt ist und anhand der nachfolgenden Figuren näher erläutert wird.

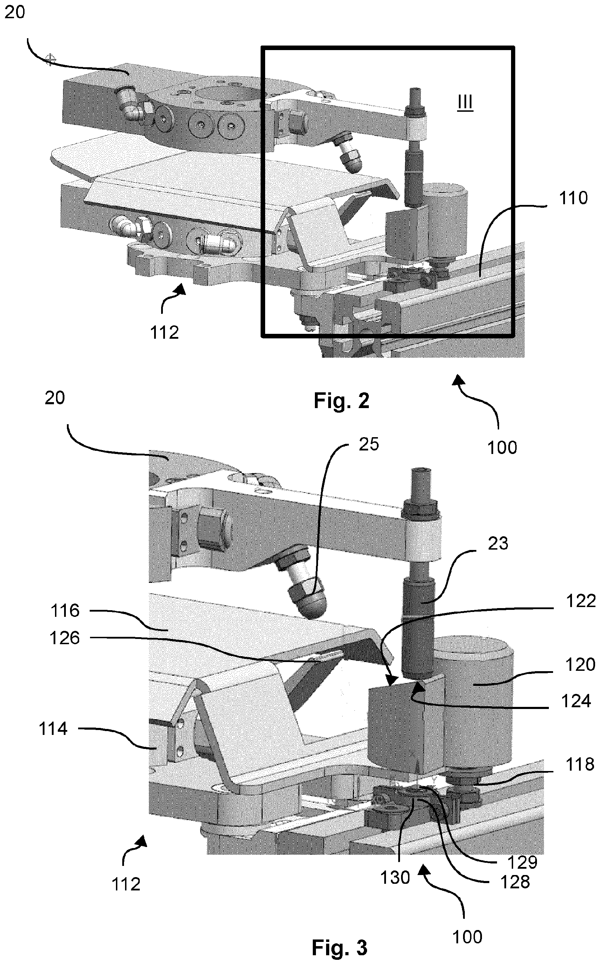

**Fig. 2** zeigt in einer perspektivischen Darstellung einen Ausschnitt des Ablagesystems 100. Das Ablagesystem 100 wird vom Endeffektor 20 des Bauroboters 10 (Fig. 1) bedient. Der Endeffektor 20 ist in Fig. 2 dazu schematisch dargestellt. In dem Zustand gemäß Fig. 2 ist in ihm, beispielhaft, kein Werkzeugmaschine, insbesondere weder Bohrwerkzeugmaschine 22 noch Staubabsaugungsvorrichtung 24 (beide Fig. 1), aufgenommen. Denkbar wäre, dass der Endeffektor 20 dem Ablagesystem 100 genähert wird, um von dort einen Gegenstand, beispielsweise eine Werkzeugmaschine, ein Werkzeug und / oder ein Verbrauchsmittel, aufzunehmen und / oder dort abzulegen.

Das Ablagesystem 100 weist mehrere, insbesondere gleichartig ausgebildete Ablagestellen auf, die entlang einer Trägerschiene **110** angeordnet sind und von denen im in Fig. 2 dargestellten Ausschnitt eine Ablagestelle **112** abgebildet ist. Die weiteren Ablagestellen können beispielsweise benachbart zur Ablagestelle 112 entlang der Trägerschiene 110 angeordnet sein.

Somit können mehrere Gegenstände, insbesondere auch Gegenstände unterschiedlicher Art, in den verschiedenen Ablagestellen des Ablagesystems 100 aufbewahrt werden. Der Endeffektor 20 kann dann je nach Bedarf eine der Ablagestellen auswählen und einen dort abgelegten Gegenstand beispielsweise aufnehmen und / oder ablegen.

Die Trägerschiene 110 kann als Profilstange ausgebildet sein. Alternativ ist denkbar, mehrere Ablagestellen nebeneinander und / oder übereinander anzuordnen. Sie können beispielsweise an einer gemeinsamen Basis montiert sein, die nicht notwendigerweise in Form einer Schiene ausgebildet ist. Benachbarte Ablagestellen können auch direkt miteinander verbunden, beispielsweise miteinander verschraubt, sein.

**Fig. 3** zeigt in einer perspektivischen Darstellung einen Ausschnitt **III** aus Fig. 2 in vergrößerter Darstellung.

Der Endeffektor 20 weist einen Steuervorsprung **23** auf. Der Steuervorsprung 23 ist in Form eines Steuerstifts ausgebildet. Weiter weist der Endeffektor 20 einen Betätigungsvorsprung **25** auf. Der Steuervorsprung 23 und / oder der Betätigungsvorsprung 25 können längenveränderlich sein, insbesondere um diese für eine korrekte Funktionsweise justieren zu können. Beispielsweise ist im Ausführungsbeispiel gemäß Fig. 3 am Betätigungsvorsprung 25 eine Hutmutter verstellbar, insbesondere drehbar, angeordnet.

Die Ablagestelle 112 weist einen Ablageplatz **114** auf. Der Ablageplatz 114 ist von einer Schutzabdeckung **116** im in Fig. 2 dargestellten Zustand abgedeckt und dadurch geschützt. Die Schutzabdeckung 116 lässt sich zur Seite hin, insbesondere horizontal oder zumindest im Wesentlichen horizontal, insbesondere mit einer zumindest überwiegenden horizontalen Richtungskomponente, verschwenken. Dazu ist sie an einer Gewindeachse **118** drehbar gelagert. Ebenfalls an der Gewindeachse 118 ist eine Steuergeometrie **120** mit einer Steuerkontur **122** angeordnet. Insbesondere ist die Steuergeometrie 120 gemeinsam mit der Schutzabdeckung 116 um die Gewindeachse 118 drehbar. Die Steuerkontur 122 weist eine gegen die Horizontale geneigt verlaufende Oberfläche auf.

Mit seiner Spitze **124** kann der Steuervorsprung 23 die Steuerkontur 122 abfahren. Dies erfolgt, in dem der Steuervorsprung 23 vertikal nach unten gedrückt wird. Aufgrund der Neigung der Steuerkontur 122 rotiert dadurch die Steuergeometrie 120 und damit über die Gewindeachse 118 auch die Schutzabdeckung 116. Somit wird die Schutzabdeckung 116 von ihrer in Fig. 2 und 3 gezeigten Ausgangsstellung in eine Schwenkstellung verschwenkt. Somit wird der Ablageplatz 114 durch Bewegen des Steuervorsprungs 23 nach unten freigegeben.

Weiter weist die Ablagestelle 112 ein Betätigungselement **126** auf. Das Betätigungselement 126 kann als Hebel, beispielsweise als Kipphebel, ausgebildet sein.

Durch Bewegen des Endeffektors 20 nach unten kann der Betätigungsvorsprung 25 auf das Betätigungselement 126 drücken. Dadurch lässt sich eine Spannvorrichtung des Ablageplatzes 114 öffnen.

Zu erkennen ist ferner ein Sperrelement **128.** Das Sperrelement 128 weist einen Rastmechanismus **130** auf. Auch weist das Sperrelement 128 einen Sperrstift **129** auf. Das Sperrelement 128 ist vertikal unterhalb des Steuervorsprungs 23 angeordnet.

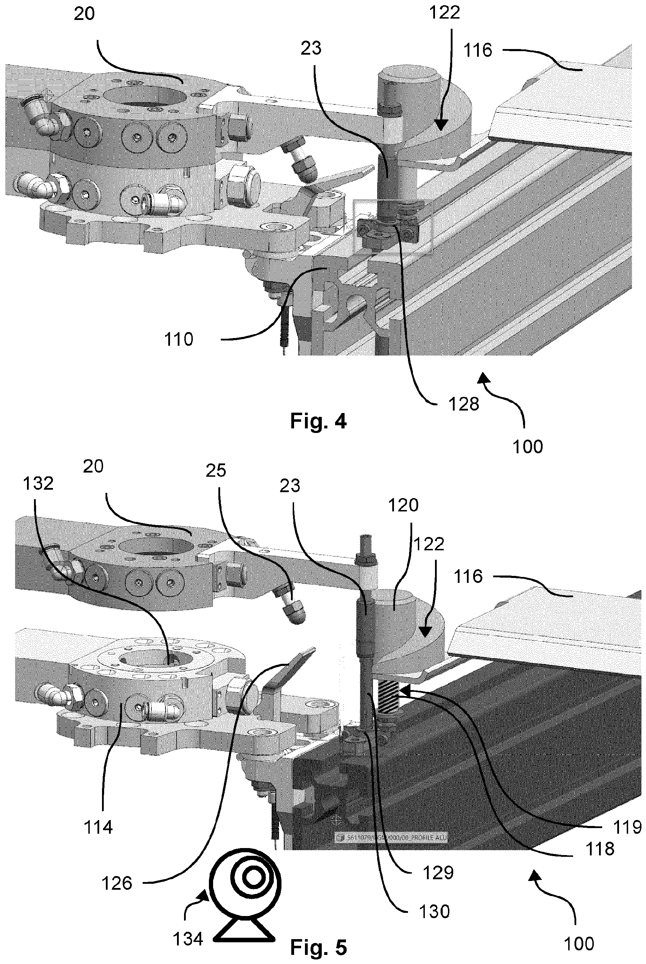

**Fig. 4** zeigt nun einen der Fig. 2 und 3 entsprechenden Zustand des Ablagesystems 100 und des Endeffektors 20, bei dem jedoch der Endeffektor 20 gegenüber seiner Stellung in Fig. 2 bzw. 3 weiter nach unten abgesenkt ist.

Auf dem Weg zu der in Fig. 4 gezeigten Position ist also die Steuerkontur 122 durch den Steuervorsprung 23 abgefahren worden. Die Schutzabdeckung 116 ist in die Schwenkstellung verschwenkt worden.

Im in Fig. 4 gezeigten Zustand kontaktiert der Steuervorsprung 23 das Sperrelement 128 ein erstes Mal.

**Fig. 5** zeigt nun einen Zustand des Ablagesystems 100 und des Endeffektors 20, nachdem der Endeffektor 20 ausgehend vom Zustand gemäß Fig. 4 wieder nach oben bewegt worden ist.

Zu erkennen ist, dass der Sperrstift 129 ausgefahren ist. Er reicht bis zur Steuergeometrie 120. Dadurch ist die Steuergeometrie 120 in der in Fig. 5 gezeigten Stellung blockiert. Die Schutzabdeckung 116 ist in ihrer Schwenkstellung fixiert.

Dazu ist der Rastmechanismus 130 eingerichtet, bei erstmaligen Kontakt, also beispielsweise wie in Fig. 4 dargestellt, des Steuervorsprungs 23 den Sperrstift 129 freizugeben und, beispielsweise federkraftgetrieben, nach oben zu treiben.

Er ist ferner eingerichtet, dass nach erneutem Herunterdrücken des Sperrstifts 129 dieser wieder in seiner Ursprungsstellung, d. h. unterhalb der Steuergeometrie 120, insbesondere im Bereich der Trägerschiene 110, verrastet.

Somit lässt sich durch erstmaligen Druck auf den Sperrstift 129 dieser nach oben bewegen. Die Schutzabdeckung 116 lässt sich in ihrer Schwenkstellung fixieren.

Durch anschließendes Herunterdrücken des Sperrstifts 129 kann die Schutzabdeckung 116 wieder freigegeben werden. Der Sperrstift 129 kann wieder in seine Ausgangslage zurückgebracht und dort fixiert, insbesondere verrastet, werden.

Im Vergleich von Fig. 2 oder 3 mit Fig. 4 oder 5 ist zu erkennen, dass durch das Verschwenken der Schutzabdeckung 116 von der Ausgangsstellung in die Schwenkstellung diese mitsamt der Steuergeometrie 120 angehoben worden ist. Dazu weist die Gewindeachse 118 ein Gewinde **119** auf. Das Gewinde 119 kann eine Steigung aufweisen, die der Neigung der Steuerkontur 122 entspricht oder steiler ist als diese.

Somit kann die Schutzabdeckung 116 nach Freigabe selbsttätig, insbesondere schwerkraftgetrieben, wieder in ihre Ausgangsstellung zurückschwenken. Insbesondere kann sie somit selbsttätig den Ablageplatz 114 wieder abdecken und damit schützen.

Wie beispielsweise anhand von Fig. 5 zu erkennen ist, weist der Ablageplatz 114 eine Spannvorrichtung **132** auf. Die Spannvorrichtung 132 lässt sich durch Betätigen des Betätigungselements 126 öffnen und durch Loslassen des Betätigungselements 126 schließen. Dadurch kann beispielsweise ein in der Spannvorrichtung 132 gehaltener Gegenstand (in Fig. 5 nicht dargestellt) freigegeben und beispielsweise vom Endeffektor 20 aufgenommen werden.

Das Betätigungselement 126 wird genau dann betätigt, wenn der Endeffektor 20 eine vorgegebene Soll-Lage erreicht. Im Beispiel gemäß Fig. 4 und 5 entspricht diese Soll-Lage einem Auffliegen des Endeffektor 20 auf dem Ablageplatz 114. Dies kann beispielsweise durch geeignete Einstellung der Länge des Betätigungsvorsprungs 25 erreicht werden.

Wird der Endeffektor 20 wieder nach oben bewegt, sodass er beispielsweise eine Lage wie in Fig. 5 abgebildet erreicht, so entfernt sich der Betätigungsstift 25 vom Betätigungselement 126.

Das Betätigungselement 126 kann sich, beispielsweise federkraftgetrieben, wieder in seine Ausgangslage, beispielsweise der in Fig. 4 und 5 dargestellten Lage, zurückbegeben. Die Spannvorrichtung 132 kann somit wieder in einen Ursprungszustand, beispielsweise einen geschlossenen Zustand, zurückversetzt werden.

Denkbar ist, beispielsweise zur Qualitätssicherung während einer Nutzung des Ablagesystems 100, einen Überwachungssensor **134** am Ablagesystem 100 und / oder am Endeffektor 20 anzuordnen.

Der Überwachungssensor 134 kann beispielsweise eine Bildaufnahmeeinheit aufweisen. Durch Bildverarbeitung mithilfe eines Rechners oder dergleichen kann dann ein von dem Überwachungssensor 134, insbesondere von der Bildaufnahmeeinheit, aufgenommenes Bild ausgewertet werden. Es kann beispielsweise festgestellt werden, in welcher Stellung, insbesondere der Ausgangsstellung oder der Schwenkstellung, sich die Schutzabdeckung 116 befindet. Auch kann ermittelt werden, ob beispielsweise der Sperrstift 129 eingefahren oder ausgefahren ist. Denkbar ist auch, dass ermittelt wird, ob das Betätigungselement 126 betätigt ist oder nicht. Alternativ oder ergänzend kann der Überwachungssensor 134 auch einen elektromechanischen Fühler, beispielsweise zur Detektion einer Stellung der Schutzabdeckung 116, aufweisen.

Anschließend kann dann jeweils ein detektierter Zustand, beispielsweise eine detektierte Stellung eines Elements, mit einem erwarteten Zustand, beispielsweise einer erwarteten Stellung des jeweiligen Elements, abgeglichen werden.

Bei Erkennen einer Abweichung kann beispielsweise ein Fehlersignal ausgelöst werden. Denkbar ist auch, dass in einem solchen Fehlerfall ein Aufnahme- und / oder ein Ablagevorgang zur Aufnahme bzw. Ablage des Gegenstands unterbrochen oder abgebrochen wird.

### Bezugszeichenliste

- 10: Bauroboter
- 12: Fahrwerk
- 14: Gehäuse
- 16: Steuerraum
- 18: Manipulator
- 20: Endeffektor
- 22: Bohrwerkzeugmaschine
- 23: Steuervorsprung
- 24: Staubabsaugungsvorrichtung
- 25: Betätigungsvorsprung
- 26: Rechnereinheit
- 28: Speichereinheit
- 100: Ablagesystem
- 110: Trägerschiene
- 112: Ablagestelle
- 114: Ablageplatz
- 116: Schutzabdeckung
- 118: Gewindeachse
- 119: Gewinde
- 120: Steuergeometrie
- 122: Steuerkontur
- 124: Spitze
- 126: Betätigungselement
- 128: Sperrelement
- 129: Sperrstift
- 130: Rastmechanismus
- 132: Spannvorrichtung
- 134: Überwachungssensor
- III: Ausschnitt

## Patentansprüche

1. **Bauroboter (10),** insbesondere zur Ausführung von Bauarbeiten auf einer Hochbau- und / oder einer Tiefbaubaustelle, mit einem Manipulator (18) und mit einem Ablagesystem (100),
- wobei das Ablagesystem (100) wenigstens eine Ablagestelle (112) aufweist, wobei die Ablagestelle (112) eine Schutzabdeckung (116), beispielsweise zum Schutz vor eintretenden und / oder austretenden Partikeln, Flüssigkeiten und / oder Gasen, und einen Ablageplatz (114) aufweist, wobei die Schutzabdeckung (116) schwenkbar an der Ablagestelle (112) angeordnet ist,
**dadurch gekennzeichnet, dass** an einem Endeffektor (20) des Manipulators (118) ein Steuervorsprung (23) ausgebildet ist, der eingerichtet ist, eine Steuerkontur (122) der wenigstens einen Ablagestelle (112) des Ablagesystems (100) abzufahren.

2. Bauroboter nach dem vorhergehenden Anspruch, **dadurch gekennzeichnet, dass** die Steuerkontur (122) eingerichtet ist, so dass durch Abfahren der Steuerkontur (122) die Schutzabdeckung (116) von einer Ausgangsstellung in eine Schwenkstellung verschwenkbar ist und / oder verschwenkt wird.

3. Bauroboter nach einem der vorhergehenden Ansprüche, **dadurch gekennzeichnet, dass** die Ablagestelle (112) ein Sperrelement (128) aufweist, das eingerichtet ist, die Schutzabdeckung (116) zumindest in der Schwenkstellung zu fixieren.

4. Bauroboter nach einem der vorhergehenden Ansprüche, **dadurch gekennzeichnet, dass** das Sperrelement (128) einen Rastmechanismus (130) aufweist, sodass das Sperrelement (128) in einem aktiven Zustand, in dem es die Schutzabdeckung (116) in der Schwenkstellung fixieren kann, und / oder in einem inaktiven Zustand, in dem die Schutzabdeckung (116) verschwenkbar ist, lösbar festsetzbar ist.

5. Bauroboter nach einem der vorhergehenden Ansprüche, **dadurch gekennzeichnet, dass** die Schutzabdeckung (116) und die Steuerkontur (122) an einer gemeinsamen Gewindeachse (118), welche ein Gewinde (119) aufweist, drehbar gelagert sind.

6. Bauroboter nach einem der vorhergehenden Ansprüche, **dadurch gekennzeichnet, dass** die Schutzabdeckung (116) in der Schwenkstellung höher ist als in der Ausgangsstellung.

7. Bauroboter nach einem der vorhergehenden Ansprüche, **dadurch gekennzeichnet, dass** die Steuerkontur (122) eine Steigung aufweist, die größer oder gleich einer Steigung des Gewindes (119) der Gewindeachse (118) ist.

8. Bauroboter nach einem der vorhergehenden Ansprüche, **dadurch gekennzeichnet, dass** die Ablagestelle (112) ein Betätigungselement (126) aufweist, das eingerichtet ist, bei Betätigung eine Spannvorrichtung (132) des Ablageplatzes (112) zu aktivieren und / oder zu deaktivieren.

9. Bauroboter nach einem der vorhergehenden Ansprüche, **dadurch gekennzeichnet, dass** der Ablageplatz (112) eingerichtet ist zur Aufnahme eines Verbrauchsmaterials, eines Werkzeugs für eine elektrische Werkzeugmaschine und / oder einer elektrischen Werkzeugmaschine, beispielsweise eine Bohrwerkzeugmaschine (22) oder eine Staubabsaugungsvorrichtung (24).

## Claims

1. **Construction robot (10),** in particular for performing construction work on a building construction site and/or a civil engineering construction site, having a manipulator (18) and having a storage system (100),
- wherein the storage system (100) has at least one storage point (112), wherein the storage point (112) has a protective cover (116), for example for protection against entering and/or escaping particles, liquids and/or gases, and a storage place (114), wherein the protective cover (116) is pivotably arranged at the storage point (112),
**characterized in that** a control projection (23) is formed on an end effector (20) of the manipulator (118) and is configured to move along a control contour (122) of the at least one storage point (112) of the storage system (100).

2. Construction robot according to the preceding claim, **characterized in that** the control contour (122) is configured such that movement along the control contour (122) results in the protective cover (116) being pivotable and/or pivoted from an initial position into a pivoted position.

3. Construction robot according to either of the preceding claims, **characterized in that** the storage point (112) has a locking element (128) which is configured to fix the protective cover (116) at least in the pivoted position.

4. Construction robot according to one of the preceding claims, **characterized in that** the locking element (128) has a latching mechanism (130) such that the locking element (128) is releasably securable in an active state, in which it can fix the protective cover (116) in the pivoted position, and/or in an inactive state, in which the protective cover (116) is pivotable.

5. Construction robot according to one of the preceding claims, **characterized in that** the protective cover (116) and the control contour (122) are rotatably mounted on a common threaded pin (118), which has a thread (119).

6. Construction robot according to one of the preceding claims, **characterized in that** the protective cover (116) is higher in the pivoted position than in the initial position.

7. Construction robot according to one of the preceding claims, **characterized in that** the control contour (122) has a slope which is greater than or equal to a slope of the thread (119) of the threaded pin (118).

8. Construction robot according to one of the preceding claims, **characterized in that** the storage point (112) has an actuating element (126) which is configured such that, upon actuation, it activates and/or deactivates a clamping device (132) of the storage space (112).

9. Construction robot according to one of the preceding claims, **characterized in that** the storage space (112) is configured for receiving a consumable, a tool for an electric power tool and/or an electric power tool, for example a drilling power tool (22) or a dust extraction device (24).

## Revendications

1. **Robot de construction** (10), notamment pour l'exécution de travaux de construction sur un chantier de bâtiment et/ou de génie civil, avec un manipulateur (18) et avec un système de dépôt (100),
- le système de dépôt (100) présentant au moins un emplacement de dépôt (112), l'emplacement de dépôt (112) présentant un couvercle de protection (116), par exemple pour la protection contre les particules, les liquides et/ou les gaz entrants et/ou sortants, et un lieu de dépôt (114), le couvercle de protection (116) étant agencé de manière pivotante sur l'emplacement de dépôt (112),
**caractérisé en ce**
**qu'**une saillie de commande (23) est réalisée sur un effecteur d'extrémité (20) du manipulateur (118), laquelle est adaptée pour suivre un contour de commande (122) de l'au moins un emplacement de dépôt (112) du système de dépôt (100).

2. Robot de construction selon la revendication précédente, **caractérisé en ce que** le contour de commande (122) est adapté de telle sorte que, par suivi du contour de commande (122), le couvercle de protection (116) peut pivoter et/ou est pivoté d'une position initiale à une position de pivotement.

3. Robot de construction selon l'une quelconque des revendications précédentes, **caractérisé en ce que** l'emplacement de dépôt (112) présente un élément de blocage (128) adapté pour fixer le couvercle de protection (116) au moins dans la position de pivotement.

4. Robot de construction selon l'une quelconque des revendications précédentes, **caractérisé en ce que** l'élément de blocage (128) présente un mécanisme d'encliquetage (130), de telle sorte que l'élément de blocage (128) peut être immobilisé de manière amovible dans un état actif dans lequel il peut fixer le couvercle de protection (116) dans la position de pivotement et/ou dans un état inactif dans lequel le couvercle de protection (116) peut pivoter.

5. Robot de construction selon l'une quelconque des revendications précédentes, **caractérisé en ce que** le couvercle de protection (116) et le contour de commande (122) sont montés de manière rotative sur un axe fileté commun (118) présentant un filetage (119).

6. Robot de construction selon l'une quelconque des revendications précédentes, **caractérisé en ce que** le couvercle de protection (116) est plus haut dans la position de pivotement que dans la position initiale.

7. Robot de construction selon l'une quelconque des revendications précédentes, **caractérisé en ce que** le contour de commande (122) présente un pas supérieur ou égal à un pas du filetage (119) de l'axe fileté (118).

8. Robot de construction selon l'une quelconque des revendications précédentes, **caractérisé en ce que** l'emplacement de dépôt (112) présente un élément d'actionnement (126) adapté pour activer et/ou désactiver un dispositif de serrage (132) du lieu de dépôt (112) lorsqu'il est actionné.

9. Robot de construction selon l'une quelconque des revendications précédentes, **caractérisé en ce que** le lieu de dépôt (112) est adapté pour recevoir un matériau consommable, un outil pour une machine-outil électrique et/ou une machine-outil électrique, par exemple une machine-outil de perçage (22) ou un dispositif d'aspiration de poussière (24).
